# FASCICULE DE BREVET EUROPEEN

(11) **EP 4 125 101 B1**
(45) Date de publication et mention de la délivrance du brevet: **13.08.2025**
(21) Numéro de dépôt: 22186364.0
(22) Date de dépôt: 22.07.2022
(51) Int. Cl.: H01B 13/08, H02G 3/04

(54) **SYSTÈME D'ENROULEMENT POUR GAINE PRÉ-FILÉE**
AUFROLLSYSTEM FÜR VORGESPONNENE HÜLLE
WINDING SYSTEM FOR PRE-SPUN SHEATH

(30) Priorité: 27.07.2021 FR 2108179
(43) Date de publication de la demande: 01.02.2023
(73) Titulaire: Corelco SAS, 01570 Manziat (FR)
(72) Inventeur: COURANT, Alain, 01190 CHAVANNES SUR REYSSOUZE (FR)
(74) Mandataire: Regimbeau

(56) Documents cités:
- US-A- 3 822 465
- US-B2- 6 588 646
- CABLE EQUIPMENTS: "Machine de préfilage PREFIL-COCCI", 5 March 2019 (2019-03-05), XP055909123, Retrieved from the Internet <URL:https://www.cable-equipements.com/fr/produits-detail/342-prefileuse-prefil-cocci.html> [retrieved on 20220405]

## Description

### DOMAINE DE L'INVENTION

La présente invention concerne un système d'enroulement pour gaine pré-filée.

### ETAT DE LA TECHNIQUE

Les gaines tubulaires annelées pré-filées ont un certain nombre d'avantages pour l'installation des câbles électriques, tels qu'une installation plus rapide et l'économie en espace de stockage. Des telles gaines sont typiquement disponibles en couronnes comportant entre 25m et 100m de gaine et de câbles agencés à l'intérieur de la gaine.

Des telles gaines pré-filées sont fabriquées par extrusion d'un matériau plastique. Une tête d'extrusion est positionnée autour d'un ou plusieurs câbles électriques et forme la gaine autour des câbles. La gaine pré-filée est ensuite transférée dans un système d'enroulement comprenant un tambour d'enroulage et un dispositif de découpe automatique pour être conditionnée en couronne. Un tel système d'enroulement est par exemple décrit dans le document de Cable Equipments : « Machine de préfilage PREFIL-COCCI », URL : https://www.cable-equipments.com/fr/produits-detail/342-prefileuse-prefil-cocci.html. La vitesse de production est élevée, typiquement jusqu'à 60m/minute.

La fabrication des gaines pré-filées présente un certain nombre de difficultés. Par exemple, les câbles se rétractent lors de l'enroulement et la découpe de la gaine et ne sont plus visibles de l'extérieur. Il est donc impossible de vérifier la présence et la composition des câbles dans une gaine conditionnée en couronne.

Pour accéder aux câbles, une découpe manuelle de la portion vide de la gaine est lente et laborieuse. Une découpe de la portion vide par machine interfèrerait avec le système d'enroulement et de découpe et n'est donc pas envisageable sur les équipements existants.

### EXPOSE DE L'INVENTION

Un but de l'invention est de concevoir un système et un procédé d'enroulement d'une gaine pré-filée permettant d'éviter une rétraction des câbles à l'intérieur de la gaine.

A cet effet, l'invention propose un système d'enroulement d'une gaine pré-filée, ladite gaine entourant au moins un câble, comprenant un bras d'alimentation, un tambour rotatif pour enrouler la gaine pré-filée amenée par le bras d'alimentation sous la forme d'une couronne et un dispositif de découpe de la gaine et de chaque câble après formation de la couronne, ledit système d'enroulement étant caractérisé en ce qu'il comprend un dispositif de soudure comprenant un générateur d'ultrasons, une partie mobile dans une direction transversale à la gaine comprenant une sonotrode couplée audit générateur, ladite sonotrode étant adaptée pour convertir l'énergie desdits ultrasons en énergie de fusion de la gaine, la partie mobile étant configurée pour amener la sonotrode en contact avec l'intérieur de la gaine pour souder une portion de la gaine à une portion d'au moins un desdits câbles.

Chaque câble étant rendu solidaire de la gaine par la soudure, on évite sa rétraction. Par conséquent, à l'issue de la découpe, chaque câble est visible et accessible à l'extrémité de la gaine.

De manière avantageuse, le système comprend une surface d'appui de la gaine en regard du dispositif de soudure. De préférence, la partie mobile est déplaçable entre une position d'ouverture adaptée pour permettre le passage de la gaine entre la surface d'appui et la sonotrode et une position de soudure dans laquelle la gaine est pincée entre la surface d'appui et la sonotrode. La partie mobile comprend une glissière pneumatique.

Le dispositif de découpe est agencé de sorte à découper la gaine sur le côté extérieur de la portion soudée dans le sens de l'enroulement de la gaine.

Le système comprend une unité de commande configurée pour détecter qu'une longueur déterminée de gaine pré-filée a été enroulée sur le tambour, immobiliser le tambour, stopper l'alimentation de la gaine et déclencher le dispositif de soudure. Le système comprend en outre un dispositif adapté pour déterminer la longueur de la gaine enroulée sur le tambour.

L'unité de commande est configurée pour activer le système de coupe lorsque la soudure est achevée.

Un autre objet de l'invention concerne une installation de fabrication d'une gaine pré-filée, comprenant une ligne d'extrusion adaptée pour former une gaine autour d'au moins un câble et un système d'enroulement.

L'invention se rapporte aussi à un procédé un procédé d'enroulement d'une gaine pré-filée entourant au moins un câble, comprenant les étapes suivantes :
- la fourniture d'un système tel que décrit ci-dessus,
- l'enroulement de ladite gaine par l'intermédiaire du tambour en rotation pour former une couronne,
- l'arrêt de la rotation dudit tambour et de l'alimentation de la gaine,
- la fixation par soudure par ultrasons d'une portion de la gaine à une portion d'au moins un câble,
- la découpe de la gaine et les câbles par le dispositif de découpe.

De manière avantageuse, la portion du câble fixée à la gaine par la soudure est une portion d'isolation électrique. De préférence, la découpe est réalisée entre la portion soudée de la gaine et la couronne enroulée sur le tambour.

### BREVE DESCRIPTION DES FIGURES

D'autres caractéristiques et avantages de l'invention ressortiront de la description détaillée qui va suivre, en référence aux dessins annexés, sur lesquels :
La figure 1 illustre une gaine pré-filée avec et une gaine sans câbles.
La figure 2 est une vue schématique d'un système d'enroulement selon l'invention.
La figure 3 est une vue schématique d'un bras d'alimentation de gaine pré-filée.
La figure 4 est une vue schématique du système de soudure.
La figure 5 illustre une gaine pré-filée comportant une soudure avec des câbles électriques.

### DESCRIPTION DETAILLEE DE MODES DE REALISATION

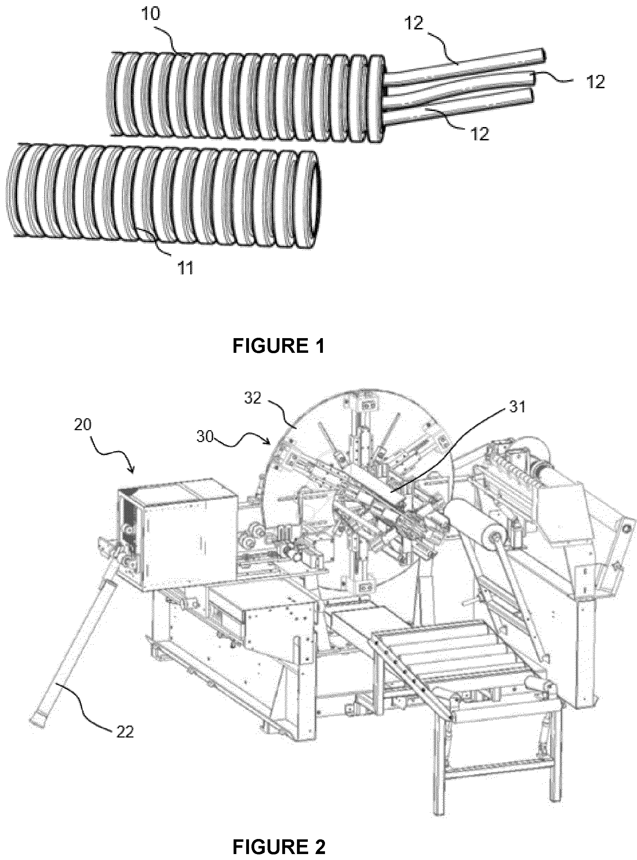

Une gaine pré-filée 10 est typiquement une gaine annelée en plastique comportant un ou plusieurs fils électriques 12 comme illustré sur la figure 1. Lesdits fils 12 peuvent comporter une isolation électrique ou non. Les gaines pré-filées sont conditionnées en couronnes dans un système d'enroulement comme illustré dans la figure 2.

Ledit système d'enroulement comprend principalement un tambour rotatif 30, un bras d'alimentation de la gaine 20, et un système de pilotage.

Le tambour rotatif 30 est agencé pour enrouler une gaine sous la forme d'une couronne. Ledit tambour comporte un système de fixation de la portion de la gaine qui est destinée à être à l'intérieur de la couronne, un noyau 31 apte à recevoir la gaine sous forme enroulée, et au moins un flasque 32 agencé à délimiter latéralement les spires de la gaine enroulée sur le noyau 31. Le noyau 31 peut être un ensemble de barres parallèles rigides formant un châssis sur lequel la gaine est enroulée. Typiquement, le noyau 31 reçoit une gaine d'une longueur finale comprise entre 25 et 100 m lors de chaque cycle d'enroulement. Le système de fixation est typiquement une pince pneumatique agencée pour bloquer l'extrémité de la gaine à l'intérieur de la couronne.

Le tambour comprend en outre un moteur ou un autre système agencé pour entrainer le noyau 31 en rotation, et un système de gestion de la vitesse en fonction de la vitesse d'arrivée de la gaine pré-filée dans le système d'enroulement. A titre d'exemple illustratif et non limitatif, la vitesse de rotation est comprise entre 0 et 200 tours/minute. Le tambour comprend en outre un frein agencé pour arrêter la rotation entre les cycles d'enroulement et en cas d'urgence. La rotation est interrompue pendant une certaine durée, par exemple environ 1 seconde, après chaque cycle d'enroulement, pour permettre le retrait de la couronne formée et la libération du noyau 31 pour l'enroulement d'une autre couronne.

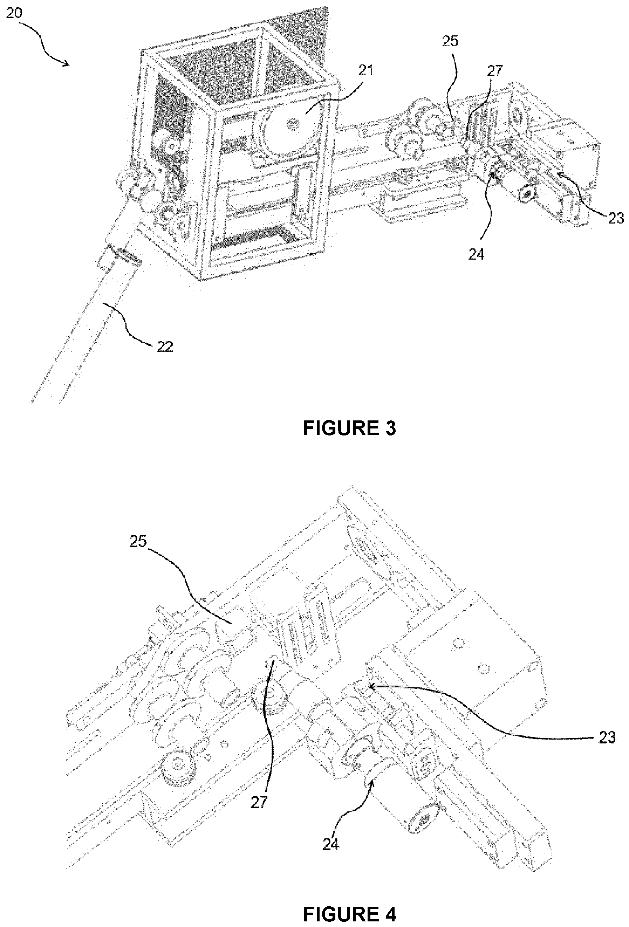

Le bras d'alimentation de la gaine 20 est illustré en détail dans la figure 3. Le bras d'alimentation comprend une roue codeuse 21 entrainée en rotation par l'intermédiaire de la gaine 10. La roue codeuse 21 est équipée d'un système de comptage du nombre de rotations, à partir duquel la longueur de la gaine enroulée peut être calculée. Ledit système de comptage transmet des données au système de pilotage afin de déterminer la fin du cycle d'enroulement lorsque la longueur finale de la gaine pour le conditionnement d'une couronne est atteinte.

Le bras d'alimentation 20 comprend en outre un pantin 22 apte à piloter la vitesse de l'enroulement de la gaine pré-filée en fonction de sa tension actuelle.

Le bras d'alimentation comporte en outre un système de découpe 23 adapté pour couper simultanément la gaine et les câbles à l'intérieur de la gaine lorsque l'enroulement d'une couronne est terminé.

En référence à la figure 4, le bras d'alimentation comprend un système de soudure 24 par ultrason adapté pour souder une portion de la gaine à une portion d'au moins un des câbles compris dans la gaine pré-filée. Un système de soudure par ultrason comprend typiquement un générateur de signaux électrique (non représenté) et un système piézoélectrique apte à transformer les signaux électriques émis par le générateur en ondes d'ultrason. Le système comprend en outre une sonotrode 27 transformant les ondes d'ultrasons en énergie de soudure. De manière illustrative et non limitative, la sonotrode 27 peut être rectangulaire, ronde ou ovale.

Pour une soudure par ultrason, ladite sonotrode 27 est amenée en contact avec l'intérieur de la gaine. A cet effet, la sonotrode 27 traverse la gaine (les ultrasons faisant fondre le matériau de la gaine qui peut alors être perforé par la sonotrode 27) jusqu'à arriver en butée sur les fils et la surface intérieure de la gaine opposée à l'ouverture précédemment pratiquée dans la gaine.

De manière avantageuse, la sonotrode 27 est agencée sur une partie mobile qui peut être une glissière pneumatique. La partie mobile est mobile par rapport à une partie fixe du système de soudure agencée dans le bras d'alimentation de la gaine pré-filée. Le déplacement de la partie mobile par rapport à la partie fixe est transversal à la direction d'alimentation de la gaine pré-filée. Ladite partie mobile est apte à appliquer la sonotrode 27 sur la gaine à souder lors d'une soudure par ultrason, et à retirer la sonotrode 27 de la gaine lorsque la soudure est achevée. Lorsque la sonotrode 27 est appliquée sur la gaine, une surface d'appui 25 reçoit la zone de la gaine en contact avec la sonotrode 27 pour éviter la déformation de la gaine pendant la soudure.

Dans un exemple purement illustratif et non limitatif, un système de soudure 24 utilisé pour une gaine pré-filée comprenant trois fils, présentant un diamètre extérieur de 16 mm, fonctionne à une puissance de 111 W et une fréquence de 35295 Hz et une énergie de 93,5 Ws. La durée du procédé de soudure est, à titre d'exemple purement illustratif et non limitatif, d'environ une seconde.

Dans un mode de réalisation et à titre purement illustratif et non limitatif, la soudure a une longueur de 12 mm dans le sens de la longueur de la gaine.

Préférablement, le système de pilotage de l'enrouleuse peut être utilisé pour piloter la sonotrode 27 et la partie mobile.

Le système de pilotage comprend un ordinateur configuré pour déterminer la longueur de la gaine déjà enroulée à partir des mesures de la roue codeuse, et commander le mouvement de la sonotrode 27, l'exécution de la soudure par ultrason, et la découpe de la gaine lorsque la longueur envisagée est atteinte.

Dans une installation de fabrication d'une gaine pré-filée, un tel système d'enroulement est typiquement installé à l'aval d'une ligne d'extrusion adaptée pour former une gaine autour d'au moins un câble.

On peut installer le système de soudure 24 par ultrason sur un dispositif d'enroulement pour gaine pré-filée existant. Le système permet en outre de prendre en compte l'encombrement et les automatismes d'un dispositif d'enroulement existant. Dans le cas d'un système d'enroulement équipé d'une sonotrode 27 lors de sa construction, moins de contraintes d'encombrement sont à prendre en compte.

On va maintenant décrire le procédé d'enroulement d'une gaine pré-filée dans un système selon l'invention. La gaine est fixée sur le noyau 31 du tambour 30 et le tambour 30 est entrainé en rotation, enroulant la gaine pré-filée sous forme d'une couronne. Pendant cette phase, la partie mobile est dans une position d'ouverture permettant le passage de la gaine entre la surface d'appui et la sonotrode. Lorsque la longueur de gaine désirée est enroulée sur le tambour, on stoppe la rotation du tambour. Ensuite, la partie mobile déplace la sonotrode 27 en direction de la gaine et jusqu'à atteindre une position de soudure dans laquelle la sonotrode 27 est appliquée sur la portion de la gaine à souder. Simultanément, la gaine est maintenue par la surface d'appui agencée du côté de la portion à souder en regard de la partie mobile comportant la sonotrode 27.

Le générateur envoie un signal électrique excitant le système piézoélectrique, et la sonotrode 27 commence à souder la gaine. La gaine fond et la sonotrode 27 avance au fur et à mesure en direction de la surface de contact. La gaine fondue fusionne avec un ou plusieurs câbles compris à l'intérieur de la gaine, ce qui crée une liaison mécanique entre la gaine et le(s)dit(s) câble(s). Dans certains modes de réalisation, la gaine fusionne avec une portion de l'isolation d'un ou plusieurs câbles, qui peut également être fondue par l'énergie apportée par la sonotrode 27. De manière alternative, la gaine peut fusionner avec une portion d'un câble sans isolation.

Lorsque la durée programmée de la soudure est atteinte, la partie mobile est reculée et rétracte le dispositif de soudure pour libérer la gaine. La durée de la soudure est typiquement d'environ 1 seconde.

Simultanément, le dispositif de découpe 23 sectionne la gaine pré-filée comportant les câbles entre la portion 15 soudée de la gaine et la couronne enroulée sur le tambour.

La soudure par ultrason est réalisée pendant le temps d'arrêt de la rotation du tambour sans prolonger le temps du cycle d'enroulement et de l'arrêt de la rotation.

La couronne est ensuite enlevée du tambour et la portion de la gaine comportant la soudure est fixée sur le tambour. Le tambour est entrainé en rotation afin d'enrouler une nouvelle couronne de la gaine arrivant du bras d'alimentation. Dans la portion à l'intérieur de la couronne que l'on commence à former, les câbles sont fixés à la gaine par l'intermédiaire de la soudure. Les câbles ne peuvent donc pas rétrécir à l'intérieur de la gaine pendant et après le procédé d'enroulement.

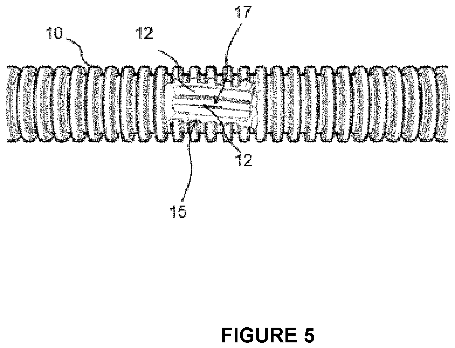

La figure 5 illustre une gaine pré-filée 10 comportant des fils électriques 12 isolés. On observe, au travers d'une ouverture 17 formée par l'application de la sonotrode 27 sur la gaine 10, que la portion 15 de la gaine opposée à ladite ouverture est soudée à l'isolation électrique des câbles 12. Les câbles 12 ne peuvent donc pas rétrécir dans la gaine 10 et sont visibles de l'extérieur. Pour l'installation finale de la gaine pré-filée, l'extrémité de la gaine comprenant la portion 15 est coupée, la soudure et le perçage n'imposent donc aucune contrainte dans l'installation électrique des câbles 12. Une telle portion 15 de gaine est agencée à l'intérieur de chaque couronne conditionnée dans un système d'enroulement selon l'invention.

## Revendications

1. Système d'enroulement d'une gaine pré-filée, ladite gaine entourant au moins un câble, comprenant un bras d'alimentation, un tambour rotatif pour enrouler la gaine pré-filée amenée par le bras d'alimentation sous la forme d'une couronne et un dispositif de découpe (23) de la gaine et de chaque câble après formation de la couronne, ledit système d'enroulement étant **caractérisé en ce qu'**il comprend un dispositif de soudure (24) comprenant un générateur d'ultrasons et une partie mobile dans une direction transversale à la gaine comprenant une sonotrode (27) couplée audit générateur, ladite sonotrode étant adaptée pour convertir l'énergie desdits ultrasons en énergie de fusion de la gaine, la partie mobile étant configurée pour amener la sonotrode en contact avec l'intérieur de la gaine pour souder une portion de la gaine à une portion d'au moins un desdits câbles.

2. Système selon la revendication 1, comprenant une surface d'appui de la gaine en regard du dispositif de soudure (24).

3. Système selon la revendication 2, dans lequel la partie mobile est déplaçable entre une position d'ouverture adaptée pour permettre le passage de la gaine entre la surface d'appui et la sonotrode et une position de soudure dans laquelle la gaine est pincée entre la surface d'appui et la sonotrode.

4. Système selon l'une des revendications 1 à 3, dans lequel la partie mobile comprend une glissière pneumatique.

5. Système selon l'une des revendications précédentes, dans lequel le dispositif de découpe (23) est agencé de sorte à découper la gaine sur le côté extérieur de la portion soudée dans le sens de l'enroulement de la gaine.

6. Système selon l'une des revendications précédentes, comprenant une unité de commande configurée pour : détecter qu'une longueur déterminée de gaine pré-filée a été enroulée sur le tambour, immobiliser le tambour, stopper l'alimentation de la gaine et déclencher le dispositif de soudure (24).

7. Système selon la revendication 6, comprenant un dispositif adapté pour déterminer la longueur de la gaine enroulée sur le tambour.

8. Système selon la revendication 7, dans lequel l'unité de commande est configurée pour activer le système de coupe lorsque la soudure est achevée.

9. Installation de fabrication d'une gaine pré-filée, comprenant une ligne d'extrusion adaptée pour former une gaine autour d'au moins un câble et un système d'enroulement selon l'une des revendications 1 à 8.

10. Procédé d'enroulement d'une gaine pré-filée entourant au moins un câble, comprenant les étapes suivantes :
• la fourniture d'un système selon l'une des revendications 1 à 8,
• l'enroulement de ladite gaine par l'intermédiaire du tambour en rotation pour former une couronne,
• l'arrêt de la rotation dudit tambour et de l'alimentation de la gaine,
• la fixation par soudure par ultrasons d'une portion de la gaine à une portion d'au moins un câble,
• la découpe de la gaine et les câbles par le dispositif de découpe (23).

11. Procédé selon la revendication 10 dans lequel la portion du câble fixée à la gaine par la soudure est une portion d'isolation électrique.

12. Procédé selon l'une des revendications 10 à 11 dans lequel la découpe est réalisée entre la portion soudée de la gaine et la couronne enroulée sur le tambour.

## Patentansprüche

1. System zum Aufrollen eines vorkonfektionierten Kabelschutzrohrs, wobei das Kabelschutzrohr mindestens ein Kabel umgibt, umfassend einen Zuführarm, eine Drehtrommel zum Aufrollen des vom Zuführarm zugeführten vorkonfektionierten Kabelschutzrohrs in Form einer Rolle und eine Vorrichtung (23) zum Schneiden des Kabelschutzrohrs und jedes Kabels nach Bildung der Rolle, wobei das Aufrollsystem **dadurch gekennzeichnet ist, dass** es eine Schweißvorrichtung (24) umfasst, die einen Ultraschallerzeuger und einen in einer Richtung quer zum Kabelschutzrohr beweglichen Teil umfasst, der eine Sonotrode (27) umfasst, die mit dem Erzeuger gekoppelt ist, wobei die Sonotrode geeignet ist, die Energie des Ultraschalls in Schmelzenergie des Kabelschutzrohrs umzuwandeln, wobei der bewegliche Teil ausgelegt ist, um die Sonotrode in Kontakt mit dem Inneren des Kabelschutzrohrs zu bringen, um einen Abschnitt des Kabelschutzrohrs mit einem Abschnitt von mindestens einem der Kabel zu verschweißen.

2. System nach Anspruch 1, umfassend eine der Schweißvorrichtung (24) zugewandte Auflagefläche des Kabelschutzrohrs.

3. System nach Anspruch 2, wobei der bewegliche Teil zwischen einer Öffnungsposition, die geeignet ist, den Durchgang des Kabelschutzrohrs zwischen der Auflagefläche und der Sonotrode zu gestatten, und einer Schweißposition beweglich ist, in der das Kabelschutzrohr zwischen der Auflagefläche und der Sonotrode eingeklemmt wird.

4. System nach einem der Ansprüche 1 bis 3, wobei der bewegliche Teil eine pneumatische Gleitschiene umfasst.

5. System nach einem der vorhergehenden Ansprüche, wobei die Schneidvorrichtung (23) derart eingerichtet ist, dass sie das Kabelschutzrohr an der Außenseite des geschweißten Abschnitts in der Aufrollrichtung des Kabelschutzrohrs schneidet.

6. System nach einem der vorhergehenden Ansprüche, das eine Steuereinheit aufweist, die ausgelegt ist, um: zu erkennen, dass eine bestimmte Länge eines vorkonfektionierten Kabelschutzrohrs auf die Trommel aufgerollt wurde, die Trommel zu arretieren, die Zufuhr des Kabelschutzrohrs zu stoppen und die Schweißvorrichtung (24) auszulösen.

7. System nach Anspruch 6, umfassend eine Vorrichtung, die geeignet ist, die Länge des auf die Trommel aufgerollten Kabelschutzrohrs zu bestimmen.

8. System nach Anspruch 7, wobei die Steuereinheit ausgelegt ist, um das Schneidsystem zu aktivieren, wenn die Schweißung abgeschlossen ist.

9. Anlage zur Herstellung eines vorkonfektionierten Kabelschutzrohrs, umfassend eine Extrusionslinie, die geeignet ist, ein Kabelschutzrohr um mindestens ein Kabel zu bilden, und ein System zum Aufrollen nach einem der Ansprüche 1 bis 8.

10. Verfahren zum Aufrollen eines vorkonfektionierten Kabelschutzrohrs, das mindestens ein Kabel umgibt, das die folgenden Schritte umfasst:
• das Bereitstellen eines Systems nach einem der Ansprüche 1 bis 8,
• das Aufrollen des Kabelschutzrohrs mittels der sich drehenden Trommel, um eine Rolle zu bilden,
• das Stoppen der Drehung der Trommel und der Zuführung des Kabelschutzrohrs,
• das Befestigen eines Abschnitts des Kabelschutzrohrs an einem Abschnitt von mindestens einem Kabel durch Ultraschallschweißen,
• das Schneiden des Kabelschutzrohrs und der Kabel durch die Schneidvorrichtung (23).

11. Verfahren nach Anspruch 10, wobei der Abschnitt des Kabels, der durch das Schweißen am Kabelschutzrohr befestigt ist, ein elektrisch isolierender Abschnitt ist.

12. Verfahren nach einem der Ansprüche 10 bis 11, wobei das Schneiden zwischen dem geschweißten Abschnitt des Kabelschutzrohrs und der auf der Trommel aufrollten Rolle durchgeführt wird.

## Claims

1. A system for winding a pre-threaded sheath, said sheath surrounding at least one cable, comprising a feed arm, a rotating drum for winding the pre-threaded sheath fed by the feed arm into a coil and a device (23) for cutting the sheath and each cable after the coil has been formed, said winding system being **characterized in that** it comprises a welding device (24) comprising an ultrasound generator and a part movable in a direction transverse to the sheath comprising a sonotrode (27) coupled to said generator, said sonotrode being adapted to convert the energy of said ultrasound into sheath melting energy, the movable part being configured to bring the sonotrode into contact with the inside of the sheath to weld a portion of the sheath to a portion of at least one of said cables .

2. System according to claim 1, comprising a sheath bearing surface facing the welding device (24).

3. System according to claim 2, wherein the movable part is displaceable between an open position adapted to allow passage of the sheath between the bearing surface and the sonotrode and a welding position in which the sheath is clamped between the bearing surface and the sonotrode.

4. System according to one of claims 1 to 3, in which the moving part comprises a pneumatic slide.

5. System according to one of the preceding claims, in which the cutting device (23) is arranged to cut the sheath on the outer side of the welded portion in the direction of sheath winding.

6. System according to one of the preceding claims, comprising a control unit configured to: detect that a given length of pre-wound sheath has been wound onto the drum, immobilize the drum, stop the sheath feed and trigger the welding device (24).

7. System according to claim 6, comprising a device adapted to determine the length of the sheath wound on the drum.

8. A system according to claim 7, in which the control unit is configured to activate the cutting system when welding is complete.

9. Installation for manufacturing a pre-threaded sheath, comprising an extrusion line adapted to form a sheath around at least one cable and a system for winding according to one of claims 1 to 8.

10. Method of winding a pre-threaded sheath surrounding at least one cable, comprising the following steps:
• supplying of a system according to one of claims 1 to 8,
• winding said sheath via the rotating drum to form a coil,
• stopping the rotation of the drum and the sheath feed,
• ultrasonic welding of a portion of the sheath to a portion of at least one cable,
• cutting of the sheath and the cables by the cutting device (23).

11. Process according to claim 10 in which the portion of the cable attached to the sheath by the welding is an electrically insulating portion.

12. Process according to one of claims 10 to 11 in which the cutting is carried out between the welded portion of the sheath and the coil wound on the drum.
